# FASCICULE DE BREVET EUROPEEN

(11) **EP 2 538 291 B1**
(45) Date de publication et mention de la délivrance du brevet: **26.02.2014**
(21) Numéro de dépôt: 11170784.0
(22) Date de dépôt: 21.06.2011
(51) Int. Cl.: G05B 19/4069

(54) **Générer des informations relatives à l'usinage d'une pièce**
Erzeugung von Informationen bezüglich der Bearbeitung eines Werkstücks
Generation of information relating to workpiece machining

(43) Date de publication de la demande: 26.12.2012
(73) Titulaire: Tornos SA, 2740 Moutier (CH)
(72) Inventeur: Currat, Jacques, 2740 Moutier (CH)
(74) Mandataire: BOVARD AG

(56) Documents cités:
- DE-A1- 4 028 332
- US-A1- 2002 129 339
- US-A1- 2009 326 680
- US-A1- 2011 078 661

## Description

### DOMAINE DE L'INVENTION

L'invention se rapporte à un procédé pour une machine-outil pour générer des informations relatives à une pièce à usiner. L'invention se rapporte aussi à un programme d'ordinateur ou une commande numérique et à un dispositif pour la mise en oeuvre de ce procédé.

### DESCRIPTION DE L'ART ANTERIEUR

Une machine-outil, telle qu'une décolleteuse, comprend généralement au moins une broche pour recevoir la pièce à usiner. Celle-ci se présente généralement sous forme d'une barre métallique. Cette ou ces broches sont généralement agencées pour tourner avec la pièce à usiner autour d'un axe. L'usinage même est effectué par des outils disposés autour de la ou des broches. Le pilotage des machines-outils modernes est généralement contrôlé par une commande numérique.

La décolleteuse est une machine-outil de grande production, c'est-à-dire qu'elle est appelée à répéter plusieurs fois la même pièce. Cette particularité se traduit aussi par la possibilité d'utiliser une architecture de commande numérique différente de celle des commandes numériques traditionnelles. La différence d'architecture réside dans le besoin d'une exécution très rapide d'un même programme ou d'un même ensemble de programmes.

La présente invention se réfère à ce type de commande numérique, qui répond à ce besoin particulier des décolleteuses. L'interpolateur (calculateur de trajectoires) effectue le calcul de l'ensemble des trajectoires avant le début de l'usinage et les résultats de ces calculs sont placés par exemple dans des tables circulaires qui seront ensuite exécutées en continu par les unités de pilotage des axes et des broches. Cette méthode permet d'une part de calculer et d'optimiser les mouvements sans les contraintes temporelles des commandes numériques traditionnelles et d'autre part d'exécuter les mouvements précalculés sans nécessiter de calculs compliqués en temps réel.

Avant le commencement de l'usinage de la pièce, l'opérateur doit définir la forme, c'est-à-dire la trajectoire, de la pièce souhaitée. Par le mot trajectoire, on comprend une courbe ayant une propriété donnée. Dans le contexte de la présente invention cette courbe est le contour d'une pièce à usiner. Une fois que la trajectoire souhaitée est définie, la machine-outil peut commencer l'usinage de la pièce.

Dans certaines solutions connues, les positions et vitesses des axes et des broches d'une machine-outil sont affichés en temps réel sur l'écran. Ces valeurs sont généralement générées à partir des valeurs des positions et des vitesses commandées, ajoutées des valeurs des décalages linéaires (longueurs d'outils et décalages d'origine) et des décalages non linéaires (rayon de plaquette).

Cette manière de faire encombre les communications entre la partie de la commande qui gère les fonctionnalités « temps réel » et la partie qui se charge de l'interface avec l'opérateur. Elle peut même ralentir les communications et compliquer le fonctionnement de la commande numérique lorsque celle-ci est équipée d'un grand nombre d'axes et de broches.

DE 40 28 332 concerne une commande numérique pour une machine-outil et divulgue une solution pour simplifier la correction des données de contrôle numérique. Dans cette solution, une langue de programmation automatique est affichée sur un écran en parallèle avec les données de contrôle numérique.

L'objet de la présente invention est de surmonter les problèmes des solutions connues.

### RESUME DE L'INVENTION

La présente invention propose donc une solution pour gérer des informations relatives à l'usinage d'une pièce à usiner sur une machine-outil comme expliqué plus en détail plus loin.

A cet effet, l'invention a pour objet un procédé de gestion des informations relatives à l'usinage d'une pièce sur une machine-outil selon la revendication 1.

La solution proposée possède plusieurs avantages. La solution permet donc d'une manière simple de suivre l'usinage de la pièce même si la machine-outil possède un grand nombre d'axes ou broches. On peut aussi facilement arrêter l'usinage au moment souhaité pour effectuer un réglage, par exemple. La trajectoire correspondant au code exécutable peut être différente de celle correspondant au code source et c'est pour cette raison que l'affichage du code source sur l'écran de contrôle plutôt que l'affichage du code exécutable est un avantage pour l'opérateur. En plus, l'opérateur ne connaît pas le code exécutable, mais il connaît le code source puisqu'il l'a écrit. L'affichage du code source sur l'écran signifie évidemment un défilement de ce code en synchronisation avec l'usinage sur la machine.

L'invention a également pour objet un programme d'ordinateur agencé pour effectuer le procédé décrit ci-dessus lorsque le programme est exécuté par un ordinateur.

L'invention a également pour objet un dispositif agencé pour effectuer le procédé décrit ci-dessus.

Les autres aspects de la présente invention se trouvent dans les revendications dépendantes.

### BREVE DESCRIPTION DES DESSINS

L'invention sera bien comprise à la lecture de la description ci-après faite à titre d'exemple non limitatif en regardant les dessins ci-annexés qui représentent schématiquement :
- figure 1 : une 1^{ère} trajectoire correspondant au code source et une 2^{ème} trajectoire avec des points d'usinage correspondant au code exécutable ; et
- figure 2 : un organigramme illustrant le procédé selon un aspect de la présente invention.

### DESCRIPTION DETAILLEE DES MODES DE REALISATION

En se reportant aux dessins, un procédé de gestion des informations relatives à l'usinage d'une pièce selon différents aspects conformément à la présente invention est expliqué plus en détail ci-dessous.

L'objet de l'invention se compose d'un procédé appelé compilation et dans lequel on génère un code objet (code exécutable) à partir du code source et dans lequel on mémorise dans le code source l'identification temporelle de tous les codes exécutables y relatifs. Ce procédé permettra d'afficher et de faire défiler le code source à l'opérateur en parfaite synchronisation avec l'exécution du code exécutable, c.à.d. en parfaite synchronisation avec l'usinage de la pièce. L'exécution est ainsi indiquée de manière continue dans ce code source affiché pour l'opérateur. Autrement dit, l'exécution décrit de manière continue la position dans le code source pour permettre l'affichage. Par conséquent l'opérateur peut facilement suivre l'avancement de l'usinage dans le code qu'il connaît.

Lors de l'exécution d'un programme d'usinage, d'autres informations peuvent être nécessaires pour l'opérateur, ces informations sont les suivantes:
- Position actuelle de l'outil par rapport à la pièce (selon ses différents axes) ;
- Position actuelle de l'outil par rapport à l'origine machine (selon ses différents axes) ;
- Distance restant à parcourir de l'outil jusqu'à la fin du bloc (selon ses différents axes). Le contour de la pièce est divisé aux blocs;
- Vitesse d'avance programmée et vitesse d'avance actuelle de chaque outil; et
- Vitesse de rotation programmée et vitesse de rotation actuelle de chaque broche.

L'objet de l'invention se compose également d'un procédé qui permettra de calculer ces valeurs instantanées de position et de vitesse des axes et des broches à afficher durant l'usinage comme expliqué ci-dessous.

Selon la présente invention, ces informations ne sont pas calculées et mémorisées préalablement, c.à.d. avant le commencement de l'usinage. Les positions et les vitesses des axes et des broches sont calculées par une unité d'affichage, au fur et à mesure de l'avancement de l'usinage, à partir des informations contenues dans le code source et à l'endroit indiqué par l'exécution, elles peuvent être corrigées de la valeur des décalages de tout type (outil, pièce, etc.) puis affichées.

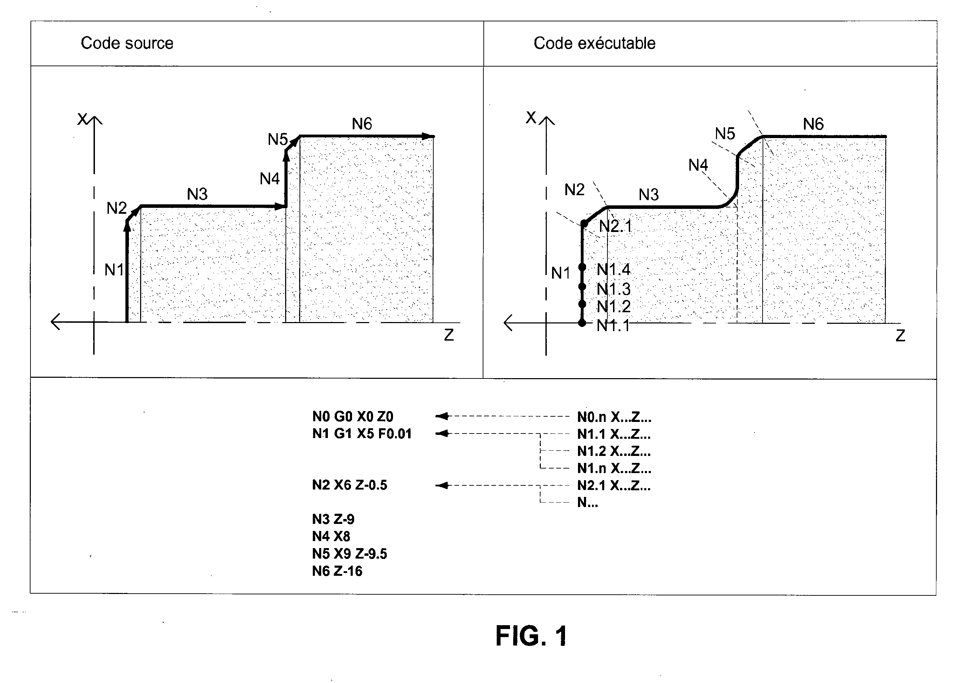

L'affichage de ces informations sera réalisé au moyen de l'unité d'affichage qui détermine la valeur des informations à afficher en fonction des étiquettes mémorisées à la compilation et de l'étiquette transmise au fur et à mesure de l'exécution comme illustré sur la figure 1.

La figure 1 illustre sur la gauche de cette figure une 1^{ère} trajectoire de la pièce à usiner correspondant au code source et sur la droite de cette figure une 2^{ème} trajectoire de la pièce à usiner correspondant au code exécutable. Ces trajectoires peuvent correspondre par exemple au contour de la pièce. On peut remarquer que la trajectoire correspondant au code exécutable n'est pas exactement la même que la trajectoire correspondant au code de source. Cette différence s'explique par exemple par le remplacement des angles vifs dans la 1^{ère} trajectoire par des arcs dans la 2^{ème} trajectoire. Ainsi on peut améliorer la qualité de l'usinage.

Dans cet exemple les trajectoires sont divisées aux six sections ou blocs, référés par N1, N2, N3, N4, N5 et N6. Ces blocs différents peuvent être usinés d'une manière différente, par exemple en utilisant une vitesse d'avance du contour différente pour ces blocs. G définit le type de mouvement, par exemple : G0 = mouvement rapide, G1 = interpolation linéaire et G2 = interpolation circulaire. N0 définit le mouvement d'approche de l'outil vers la matière. En-bas de cette figure on voit les paramètres qui définissent chaque bloc. Par exemple par « N2 X6 Z-05 » on comprend que lors de l'usinage de la section N2, on avance d'une manière linéaire au point 6 sur l'axe X et au point -0.5 sur l'axe Z. La référence F signifie la vitesse d'avance du contour. Le temps réel informe l'unité d'affichage de chaque évolution de la position dans le code exécutable. La synchronisation est donc effectuée avec des étiquettes temporelles qui marquent le code source de manière à retrouver le code à afficher en fonction de l'évolution temporelle du code exécutable.

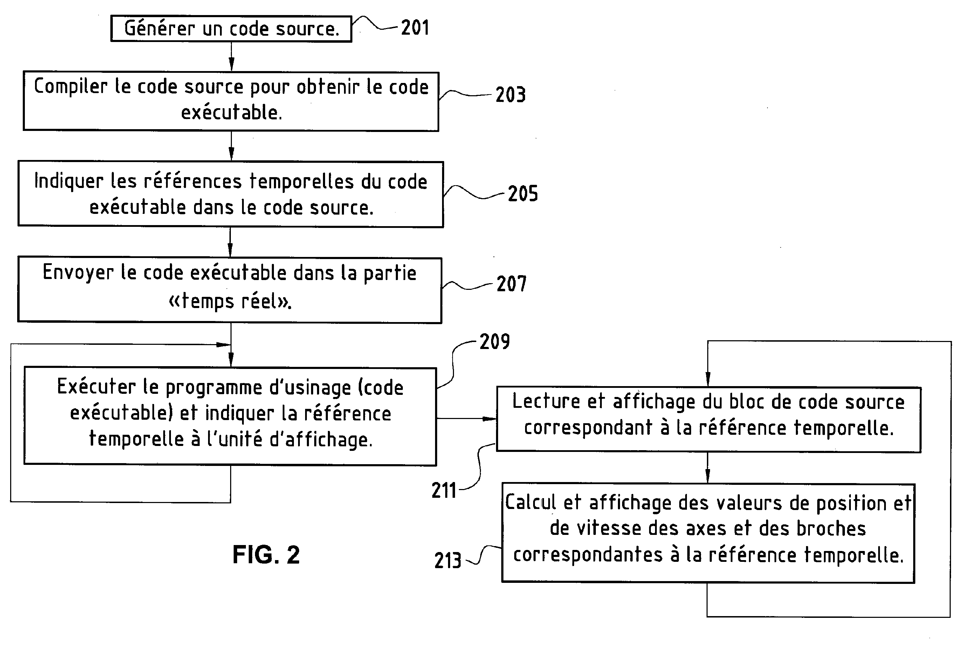

L'organigramme de la figure 2 résume le procédé décrit ci-dessus. A l'étape 201 on génère et mémorise le code source. A l'étape 203 on compile le code source pour obtenir le code exécutable. Le compilateur génère non seulement les informations nécessaires à l'usinage mais aussi celles nécessaires à l'affichage. Les informations pour l'affichage sont le code source et les étiquettes relatives au code exécutable. A l'étape 205 on indique les références temporelles du code exécutable dans le code source. Ensuite à l'étape 207 on envoie le code exécutable dans la partie « temps réel » pour l'exécution. A l'étape 209 on exécute le code exécutable, c.à.d. on commence l'usinage de la pièce. On indique aussi la référence temporelle du code exécutable à l'unité d'affichage. A l'étape 211 l'unité d'affichage lit l'étiquette du code exécutable et affiche le bloc du code source correspondant à la référence temporelle (étiquette). L'étape 211 est effectuée en parallèle avec l'étape 209. Enfin à l'étape 213 l'unité d'affichage calcule et affiche les valeurs de position et de vitesse des axes et des broches correspondantes à la référence temporelle. Ces valeurs peuvent aussi être corrigées de la valeur des décalages de tout type (outil, pièce, etc.). Il est à noter que l'étape 213 est optionnelle.

On pourrait aussi envisager plusieurs variantes dans les configurations expliquées ci-dessus sans sortir du cadre de la présente invention, tel que défini par les revendications.

## Revendications

1. Un procédé de gestion des informations relatives à l'usinage d'une pièce sur une machine-outil, le procédé comprend :
• la génération (201) d'un code source pour usiner la pièce;
• la compilation (203) du code source pour obtenir un code exécutable ;
• l'indication (205), pendant la compilation du code source, des références temporelles du code exécutable dans le code source ;
• l'exécution (209) du code exécutable pour usiner la pièce;
• l'indication (209), au fur et à mesure de l'exécution du code exécutable, d'une référence temporelle du code exécutable à une unité d'affichage agencée pour afficher le code source ; et
• l'affichage (211) du code source à un opérateur en lisant la référence temporelle du code exécutable par l'unité d'affichage et en affichant le bloc du code source correspondant à la référence temporelle par l'unité d'affichage,
dans lequel le code source est affiché à l'opérateur lors de l'usinage de la pièce.

2. Le procédé selon la revendication 1, dans lequel l'avancement de l'usinage est indiqué d'une manière continue à l'opérateur en indiquant la position actuelle dans le code source.

3. Le procédé selon l'une quelconque des revendications précédentes, comprenant en plus l'affichage (213), en synchronisation avec l'usinage, d'au moins un paramètre relié à l'usinage.

4. Le procédé selon la revendication 3, dans lequel le procédé comprend, avant l'affichage, lecalcul (213) dudit paramètre.

5. Le procédé selon la revendication 4, dans lequel le paramètre est calculé lors de l'avancement de l'usinage et dans lequel le paramètre est affiché en fonction de la référence temporelle du code exécutable.

6. Le procédé selon l'une quelconque des revendications 3 à 5, dans lequel ledit paramètre est au moins un des suivants : position actuelle de l'outil de la machine-outil par rapport à la pièce; position actuelle d'un outil de la machine-outil par rapport à l'origine machine-outil; distance restant à parcourir d'un outil jusqu'à la fin du bloc, le contour de la pièce étant divisé en blocs; vitesse d'avance programmée et vitesse d'avance actuelle d'au moins un outil; et vitesse de rotation programmée et vitesse de rotation actuelle d'au moins une broche.

7. Le procédé selon l'une quelconque des revendications 3 à 6, dans lequel ledit paramètre est obtenu en lisant la référence temporelle du code exécutable.

8. Le procédé selon l'une quelconque des revendications 3 à 7, dans lequel, avant l'affichage, ledit paramètre est corrigé d'une valeur de décalage de l'outil et/ou la pièce.

9. Le procédé selon l'une quelconque des revendications précédentes, dans lequel l'affichage est effectué par une unité d'affichage et cette unité d'affichage est informée (209) de chaque évolution de la position dans le code exécutable d'au moins un outil.

10. Un programme d'ordinateur pour une machine-outil, le programme d'ordinateur étant agencé pour exécuter le procédé selon l'une quelconque des revendications précédentes lorsque le programme est exécuté sur un ordinateur.

11. Un dispositif pour gérer des informations relatives à une pièce à usiner, le dispositif comprend des moyens pour :
• générer un code source pour usiner la pièce;
• compiler le code source pour obtenir un code exécutable
• indiquer, pendant la compilation du code source, des références temporelles du code exécutable dans le code source ;
• exécuter le code exécutable pour usiner la pièce;
• indiquer, au fur et à mesure de l'exécution du code exécutable, une référence temporelle du code exécutable à une unité d'affichage agencée pour afficher le code source ; et
• afficher le code source à un opérateur en lisant la référence temporelle du code exécutable par l'unité d'affichage et en affichant le bloc du code source correspondant à la référence temporelle par l'unité d'affichage,
dans lequel le code source est agencé pour être affiché à l'opérateur lors de l'usinage de la pièce.

## Patentansprüche

1. Ein Verfahren zur Verwaltung von Informationen in Bezug auf eine Bearbeitung eines Werkstücks auf einer Werkzeugmaschine, wobei das Verfahren aufweist ;
• Erstellen (201) eines Quellcodes zur Bearbeitung des Werkstücks;
• Kompilierung (203) des Quellcodes, um einen ausführbaren Code zu erhalten;
• Ausgabe (205) von temporalen Referenzen für den ausführbaren Code während der Kompilierung des Quellcodes;
• Ausführung (209) des ausführbaren Codes zur Bearbeitung des Werkstücks;
• Ausgabe (209) einer temporalen Referenz für den ausführbaren Code an eine Anzeigeneinheit, die zur Anzeige des Quellcodes ausgestaltet ist, wenn der ausführbare Code ausgeführt wird; und
• Anzeigen (211) des Quellcodes für einen Arbeiter durch Auslesen der temporalen Referenz für den ausführbaren Code durch die Anzeigeneinheit und Anzeigen des Quellcodeblocks entsprechend der temporalen Referenz durch die Anzeigeneinheit,
wobei der Quellcode dem Arbeiter während der Bearbeitung des Werkstücks angezeigt wird.

2. Das Verfahren nach Anspruch 1, wobei der Fortgang der Bearbeitung dem Arbeiter kontinuierlich angegeben wird durch Anzeigen der aktuellen Position in dem Quellcode.

3. Das Verfahren nach einem der vorhergehenden Ansprüche, das ferner das Anzeigen (213) wenigstens eines die Bearbeitung betreffenden Parameters in Synchronisation mit der Bearbeitung aufweist.

4. Das Verfahren nach Anspruch 3, wobei das Verfahren die Berechnung (213) des Parameters vor der Bearbeitung aufweist.

5. Das Verfahren nach Anspruch 4, wobei der Parameter während des Fortgangs der Bearbeitung berechnet wird und wobei der Parameter als eine Funktion der temporalen Referenz für den ausführbaren Code angezeigt wird.

6. Das Verfahren nach einem der Ansprüche 3 bis 5, wobei der Parameter wenigstens einer der Folgenden ist : eine aktuelle Position des Werkzeugs der Werkzeugmaschine in Bezug auf das Werkstück; eine aktuelle Position des Werkzeugs der Werkzeugmaschine in Bezug auf den Anfangspunkt der Werkzeugmaschine; der verbleibende Abstand, den ein Werkzeug bis zum Ende des Blocks fahren muss, wobei die Kontur des Werkstücks in Blöcke unterteilt ist; programmierte Fahrgeschwindigkeit und aktuelle Fahrgeschwindigkeit wenigstens eines Werkzeugs; und programmierte Drehgeschwindigkeit und aktuelle Drehgeschwindigkeit wenigstens einer Welle.

7. Das Verfahren nach einem der Ansprüche 3 bis 6, wobei der Parameter erhalten wird durch Auslesen der temporalen Referenz des ausführbaren Codes.

8. Das Verfahren nach einem der Ansprüche 3 bis 7, wobei vor dem Anzeigen der Parameter durch einen Offsetwert des Werkzeugs und/oder des Werkstücks korrigiert wird.

9. Das Verfahren nach einem der vorhergehenden Ansprüche, wobei das Anzeigen durch eine Anzeigeneinheit ausgeführt wird und diese Anzeigeneinheit für wenigstens ein Werkzeug über jede Positionsänderung in dem ausführbaren Code informiert (209) wird.

10. Ein Computerprogramm für eine Werkzeugmaschine, wobei das Computerprogramm zur Ausführung des Verfahrens nach einem der vorhergehenden Ansprüche ausgelegt ist, wenn das Programm auf einem Computer läuft.

11. Eine Vorrichtung zum Verwalten von Informationen in Bezug auf ein zu bearbeitendes Werkstück, wobei die Vorrichtung folgende Mittel aufweist :
• Mittel zum Erstellen eines Quellcodes zur Bearbeitung des Werkstücks;
• Mittel zum Kompilieren des Quellcodes zum Erhalten eines ausführbaren Codes;
• Mittel zum Anzeigen temporaler Referenzen des ausführbaren Code in dem Quellcode während des Kompilierens des Quellcodes;
• Mittel zum Ausführen des ausführbaren Codes zur Bearbeitung des Werkstücks;
• Mittel zur Ausgabe einer temporalen Referenz des ausführbaren Codes an eine Anzeigeneinheit, die zum Anzeigen des Quellcodes ausgebildet ist, während der ausführbare Code ausgeführt wird, und
• Mittel zum Anzeigen des Quellcodes für einen Arbeiter durch Auslesen der temporalen Referenz des ausführbaren Codes durch die Anzeigeneinheit und durch Anzeigen des Quellcodeblocks entsprechend der temporalen Referenz durch die Anzeigeneinheit,
wobei der Quellcode derart ausgebildet ist, dass er einem Arbeiter während der Bearbeitung des Werkstücks angezeigt ist.

## Claims

1. A method of management of information relating to machining of a workpiece on a machine tool, the method comprising:
• the generation (201) of a source code for machining the workpiece;
• the compilation (203) of the source code to obtain an executable code;
• the indication (205), during the compilation of the source code, of temporal references for the executable code in the source code;
• the execution (209) of the executable code for machining the workpiece;
• the indication (209), as the executable code is executed, of a temporal reference for the executable code to a display unit designed to display the source code; and
• the display (211) of the source code to an operator by reading the temporal reference for the executable code by the display unit and by displaying the source code block corresponding to the temporal reference by the display unit,
wherein the source code is displayed to the operator during the machining of the workpiece.

2. The method according to claim 1, wherein the progress of the machining is continuously indicated to the operator by indicating the current position in the source code.

3. The method according to any one of the preceding claims, further comprising the display (213), in synchronization with the machining, of at least one parameter related to the machining.

4. The method according to claim 3, wherein the method comprises, prior to the machining, the calculation (213) of said parameter.

5. The method according to claim 4, wherein the parameter is calculated during progress of the machining and wherein the parameter is displayed as a function of the temporal reference for the executable code.

6. The method according to any one of the claims 3 to 5, wherein the said parameter is at least one of the following: current position of the tool of the machine tool with respect to the workpiece; current position of a tool of the machine tool with respect to the machine tool starting point; the remaining distance a tool is to traverse until the end of the block, the contour of the workpiece being divided into blocks; programmed advance speed and current advance speed of at least one tool; and programmed speed of rotation and current speed of rotation of at least one spindle.

7. The method according to any one of the claims 3 to 6, wherein the said parameter is obtained by reading the temporal reference of the executable code.

8. The method according to any one of the claims 3 to 7, wherein, before the display, the said parameter is corrected by an offset value of the tool and/or the workpiece.

9. The method according to any one of the preceding claims,
wherein the display is carried out by a display unit and this display unit is informed (209) of each change of position in the executable code for at least one tool.

10. A computer program for a machine tool, the computer program being designed to execute the method according to any one of the preceding claims when the program is run on a computer.

11. A device for managing information relating to a workpiece to be machined, the device comprising means to:
• generate a source code for machining the workpiece;
• compile the source code for obtaining an executable code;
• indicate, during the compilation of the source code, temporal references of the executable code in the source code;
• execute the executable code in order to machine the workpiece;
• indicate, as the executable code is executed, a temporal reference of the executable code to a display unit designed to display the source code; and
• display the source code to an operator by reading the temporal reference of the executable code by the display unit and by displaying the source code block corresponding to the temporal reference by the display unit,
wherein the source code is designed to be displayed to the operator during the machining of the workpiece.
